# FASCICULE DE BREVET EUROPEEN

(11) **EP 0 894 997 B1**
(45) Date de publication et mention de la délivrance du brevet: **14.05.2003**
(21) Numéro de dépôt: 98401896.0
(22) Date de dépôt: 24.07.1998
(51) Int. Cl.: F16F 13/14

(54) **Support antivibratoire hydraulique**
Schwingungsdämpfendes Lager
Hydraulic damping support

(30) Priorité: 01.08.1997 FR 9709879
(43) Date de publication de la demande: 03.02.1999
(73) Titulaire: HUTCHINSON, 75008 Paris (FR)
(72) Inventeur: Bellamy, Alain, 41100 Naveil (FR); Reh, Denis, 28200 Thiville (FR)
(74) Mandataire: Burbaud, Eric

(56) Documents cités:
- EP-A- 0 342 680
- EP-A- 0 646 735
- EP-A- 0 709 594
- GB-A- 2 211 270
- PATENT ABSTRACTS OF JAPAN vol. 096, no. 002, 29 février 1996 & JP 07 269638 A (KINUGAWA RUBBER IND CO LTD), 20 octobre 1995
- PATENT ABSTRACTS OF JAPAN vol. 018, no. 051 (M-1548), 26 janvier 1994 & JP 05 272584 A (TOKAI RUBBER IND LTD), 19 octobre 1993
- PATENT ABSTRACTS OF JAPAN vol. 096, no. 002, 29 février 1996 & JP 07 269639 A (KINUGAWA RUBBER IND CO LTD), 20 octobre 1995

## Description

La présente invention est relative aux supports antivibratoires hydrauliques.

Plus particulièrement, l'invention concerne un support antivibratoire hydraulique, destiné à être interposé entre deux éléments rigides pour amortir des vibrations entre ces deux éléments essentiellement selon un premier axe, ce support comportant :
- des première et deuxième armatures rigides, solidarisables respectivement avec les deux éléments rigides à réunir, la deuxième armature étant constituée par une platine qui s'étend selon un plan moyen perpendiculaire au premier axe et qui présente une race dite de support, orientée vers la première armature,
- un corps en élastomère qui relie la première armature à la platine et qui présente une base appliquée en contact étanche contre la face de support de la platine par simple serrage parallèlement au premier axe, ce serrage axial étant obtenu au moyen d'une plaque ajourée rigide qui est noyée dans la base du corps en élastomère et qui est maintenue appliquée contre la face de support de la platine par sertissage, la base du corps en élastomère présentant à sa périphérie, d'une part, au moins deux bords opposés, dits bords de fixation, le long desquels est réalisé ledit sertissage, et d'autre part, au moins deux bords libres qui séparent les bords de fixation, la plaque ajourée présentant elle-même des bords libres qui sont noyés dans les bords libres de la base du corps en élastomère et qui sont simplement en appui axial contre la face de support de la platine, le corps en élastomère comportant en outre une paroi épaisse en forme de cloche qui s'étend selon le premier axe en s'évasant depuis un sommet solidaire de la première armature jusqu'à la base dudit corps en élastomère et qui délimite avec la face de support de la platine au moins une première chambre hydraulique remplie de liquide,
- une deuxième chambre hydraulique déformable qui est également remplie de liquide,
- et un canal étranglé rempli de liquide, qui relie entre elles les première et deuxième chambres hydrauliques.

Le document EP-A-0 646 735 décrit un exemple de support antivibratoire hydraulique du type visé ci-dessus.

La présente invention a notamment pour but de perfectionner ce support connu afin d'en améliorer l'étanchéité, notamment au niveau des bords libres de la base du corps en élastomère.

A cet effet, selon l'invention, un support antivibratoire hydraulique du genre en question est essentiellement caractérisé en ce que la base du corps en élastomère présente à sa périphérie, au moins le long de chacun desdits bords libres, une lèvre d'étanchéité extérieure en élastomère qui fait saillie vers la platine et qui est au moins partiellement écrasée contre la face de support de cette platine, ladite lèvre d'étanchéité extérieure présentant un profil dissymétrique non perpendiculaire à la face de support de la platine, ce profil étant incliné partout dans le même sens par rapport à ladite face de support de la platine.

Grâce à ces dispositions, la lèvre d'étanchéité périphérique ne présente pas de changement de sens d'inclinaison par rapport à la face de support de la platine, même à la suite des légers mouvements relatifs qui peuvent avoir lieu entre la platine et les bords libres de la base du corps en élastomère, ce qui garantit un contact étanche continu entre lesdits bords libres et la platine, en évitant tout risque de fuite au niveau desdits bords libres.

A l'inverse, l'expérience a montré aux inventeurs de la présente invention qu'en dotant les bords libres de la base du corps en élastomère d'une simple nervure d'étanchéité axiale classique (c'est-à-dire dont le profil est parallèle au premier axe), non seulement cette nervure n'augmentait pas l'étanchéité du support antivibratoire, mais encore elle créait un risque de fuite supplémentaire.

En effet, une telle nervure axiale se couche aléatoirement d'un côté et de l'autre sous l'effet combiné du serrage axial de la base du corps en élastomère contre la platine et des légers mouvements relatifs qui peuvent avoir lieu entre la platine et les bords libres de la base du corps en élastomère, et il s'avère que les zones de changement d'inclinaison de la nervure par rapport à la face de support de la platine sont propices aux fuites, malgré le serrage susmentionné de la base du corps en élastomère contre la platine.

Dans des modes de réalisation préférés de l'invention, on peut éventuellement avoir recours en outre à l'une et/ou à l'autre des dispositions suivantes :
- le profil de la lèvre d'étanchéité périphérique est incliné en s'évasant en direction de la face de support de la platine ;
- chaque lèvre d'étanchéité extérieure se présente sous la forme d'un bourrelet plein en élastomère qui a un profil dissymétrique en V, avec d'une part une face d'appui intérieure qui est évasée en direction de la face de support de la platine et qui est écrasée contre ladite face de support de la platine, et d'autre part une face latérale extérieure qui est sensiblement perpendiculaire au plan moyen de la platine ;
- la face de support de la platine présente une partie centrale surélevée qui fait saillie vers le corps en élastomère et qui est encadrée par des bords en pente s'évasant vers l'extérieur en s'éloignant de la première armature, en correspondance avec les bords libres de la base du corps en élastomère, les faces d'appui des lèvres d'étanchéité extérieures étant respectivement en appui contre ces bords en pente ;
- la face de support de la platine comporte en outre des surfaces extérieures planes qui sont disposées à l'extérieur desdits bords en pente et qui s'étendent parallèlement au plan moyen de la platine, les faces d'appui des lèvres d'étanchéité extérieure présentant chacune une zone extérieure plane qui s'étend parallèlement à la surface extérieure plane correspondante de la platine et qui est en appui contre ladite surface extérieure plane ;
- le corps en élastomère comporte en outre une paroi mince librement déformable qui délimite la deuxième chambre hydraulique avec la face de support de la platine, le canal étranglé étant lui-même délimité entre la base du corps en élastomère et ladite face de support de la platine ;
- la base au corps en élastomère présente en outre au moins une lèvre d'étanchéité intermédiaire qui fait saillie vers la platine et qui est écrasée au moins partiellement contre la face de support de cette platine, en isolant les uns des autres la chambre de travail, la chambre de compensation et le canal étranglé en dehors des communications du canal étranglé avec lesdites chambres ;
- la base du corps en élastomère présente deux lèvres d'étanchéité intermédiaires parallèles et séparées l'une de l'autre entre la chambre de travail et la chambre de compensation ;
- les bords de fixation de la base du corps en élastomère comportent chacun un bourrelet d'élastomère qui fait saillie vers la platine et qui est au moins partiellement écrasé contre la face de support de cette platine, les bourrelets qui correspondent aux différents bords de fixation se raccordant aux différentes lèvres d'étanchéité, en formant ainsi une barrière d'étanchéité périphérique sur tout le pourtour de la base du corps en élastomère ;
- le support antivibratoire comporte en outre un capot rigide qui recouvre au moins partiellement la paroi épaisse du corps en élastomère de façon à limiter les débattements de la première armature par rapport à la platine, ce capot présentant des zones de fixation qui s'étendent parallèlement à la platine et qui sont solidarisées avec cette platine au voisinage des bords libres de la base du corps en élastomère, lesdits bords libres de la plaque ajourée et de la base de ce corps en élastomère étant serrés parallèlement au premier axe entre la face de support de la platine et ledit capot ;
- la base du corps en élastomère présente deux bords de fixation séparés l'un de l'autre par deux bords libres, le capot présentant une forme générale en Ω ouvert selon un deuxième axe perpendiculaire audit premier axe, avec deux ailes de fixation formant lesdites zones de fixation, et la première armature se présentant sous la forme d'un organe rigide allongé s'étendant longitudinalement selon ledit deuxième axe.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue de dessus d'un support antivibratoire hydraulique selon une forme de réalisation de l'invention,
- la figure 2 est une vue en coupe selon la ligne II-II de la figure 1,
- la figure 3 est une vue en coupe selon la ligne III-III de la figure 2,
- la figure 4 est une vue de détail de la figure 2,
- la figure 5 est une vue de dessous en perspective du corps en élastomère appartenant au support antivibratoire des figures 1 à 4,
- et la figure 6 est une vue de détail en coupe du corps en élastomère représenté sur la figure 5,

Sur les différentes figures, les mêmes références désignent des éléments identiques ou similaires.

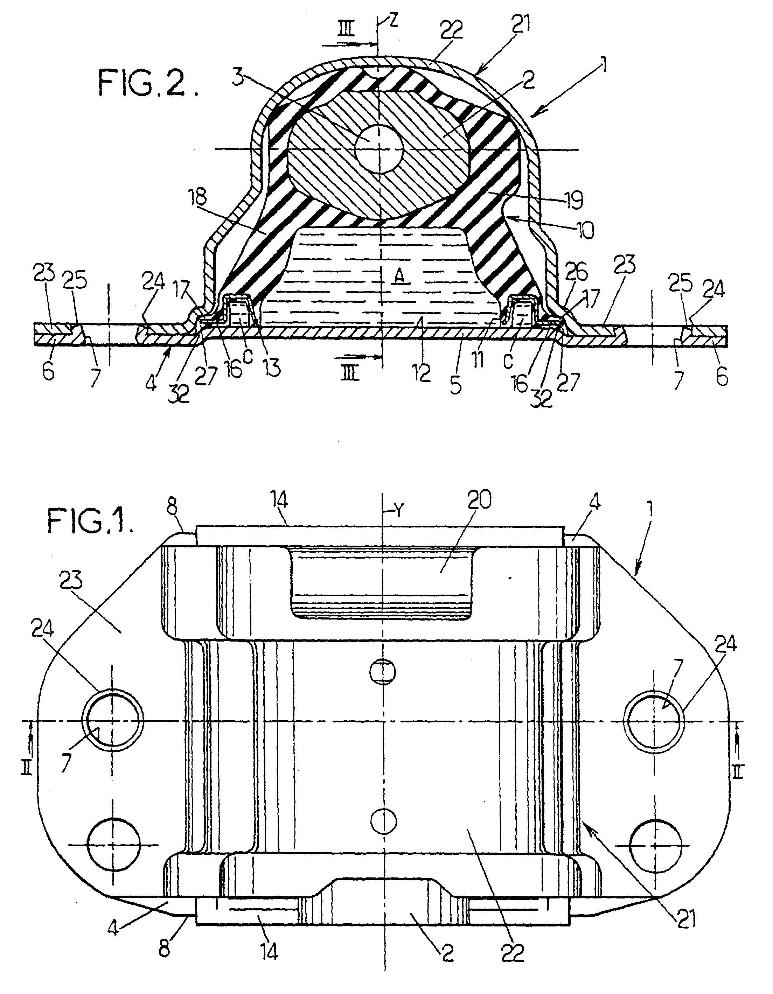

Le support antivibratoire hydraulique 1 représenté sur les figures 1 à 3 est destiné à être interposé entre deux éléments rigides tels qu'un châssis et un groupe motopropulseur de véhicule, pour supporter le groupe motopropulseur et pour amortir et filtrer des vibrations entre ces deux éléments, essentiellement selon un axe vertical Z.

Ce support antivibratoire comporte tout d'abord une première armature rigide 2 qui se présente sous la forme d'un organe métallique allongé s'étendant selon un axe Y perpendiculaire à l'axe Z et qui est percé d'un trou central 3 permettant sa fixation par exemple au groupe motopropulseur du véhicule.

Cette première armature 2 est disposée au-dessus d'une deuxième armature rigide 4, qui se présente sous la forme d'une platine métallique de forme générale sensiblement plane, s'étendant perpendiculairement à l'axe Z, c'est-à-dire horizontalement.

Cette platine 4 présente une partie centrale emboutie 5 de forme plane, qui est légèrement surélevée par rapport à deux ailes de fixation 6 encadrant ladite partie centrale.

Chacune de ces ailes 6 est pourvue d'au moins un trou de fixation 7 destiné à fixer la platine 4 au châssis du véhicule.

Bien entendu, la platine 4 pourrait être fixée au bloc motopropulseur et l'armature 2 au châssis, auquel cas l'armature 2 serait située sous la platine 4, la disposition de l'ensemble du support antivibratoire étant alors inversée par rapport à la disposition représentée sur les dessins.

Par ailleurs, la platine 4 présente deux bords latéraux 8 qui s'étendent chacun entre les deux ailes de fixation 6 et qui forment respectivement des rebords ou lisières 9 en décrochement vers le bas par rapport à la partie centrale 5.

De plus, la platine 4 est reliée à l'armature 2 par un corps en élastomère 10 qui est moulé d'une seule pièce et qui présente une base 11 appliquée de façon étanche sur la face supérieure 12 ou face de support de la platine 4, par simple serrage axial parallèlement à l'axe Z.

Ce serrage axial est obtenu par sertissage d'une plaque métallique rigide 13, ajourée et emboutie, qui est généralement réalisée en acier et qui est noyée dans la base 11 du corps en élastomère.

Plus particulièrement, cette plaque ajourée 13 présente deux pattes latérales 14 qui font saillie vers l'extérieur le long des rebords 9 à partir de deux bords opposés 15 de la base du corps en élastomère, et qui sont serties sur lesdits rebords 9.

Par ailleurs, les pattes 14 de la plaque ajourée 13 sont séparées l'une de l'autre par deux bords opposés 16 de ladite plaque, qui forment la périphérie de cette plaque ajourée avec les pattes 14 et qui constituent chacun une lisière plane parallèle au plan de la platine 4.

Ces deux bords libres 16 sont noyés dans la base 11 du corps en élastomère, qui forme ainsi également deux bords libres 17 en correspondance avec les bords 16, lesdits bords libres 16,17 étant simplement en appui axial contre la face supérieure 12 de la platine, sans sertissage.

Le corps en élastomère 10 comporte par ailleurs une paroi épaisse 18 en forme de cloche qui présente une résistance en compression suffisante pour servir de support au bloc motopropulseur. Cette paroi 18 s'étend en s'évasant vers le bas, depuis un sommet 19 adhérisé sur l'armature 2 jusqu'à la base 11 du corps en élastomère, en délimitant avec la face supérieure 12 de la platine une chambre de travail A remplie de liquide.

De plus, le corps en élastomère 10 forme en outre une membrane souple 20 également en forme de cloche, qui est librement déformable et qui délimite avec la face supérieure 12 de la platine une chambre de compensation B également remplie de liquide.

Les deux chambres A,B sont ainsi juxtaposées de façon non concentrique sur la face supérieure 12 de la platine, ces deux chambres pouvant être par exemple sensiblement alignées selon l'axe Y.

De plus, les deux chambres A,B communiquent ensemble par l'intermédiaire d'un canal étranglé C qui est délimité entre, d'une part, la face supérieure 12 de la platine, et d'autre part, une gorge ménagée dans la base 11 du corps en élastomère, la forme de cette gorge étant de préférence définie par des emboutis de la plaque ajourée 13.

Ce canal étranglé C permet ainsi des transferts de liquide entre les chambres A et B, afin d'amortir des vibrations entre l'armature 2 et la platine 4, essentiellement selon l'axe Z.

Enfin, pour limiter les débattements relatifs de l'armature 2 par rapport à la platine 4, le support antivibratoire comporte en outre un capot métallique rigide 21, qui est profilé sensiblement en forme de Ω et qui présente deux faces axiales ouvertes parallèlement à l'axe Y.

Ce capot 21 présente une partie centrale 22 qui peut coopérer par butée avec des bossages du corps en élastomère et qui est encadrée par deux ailes 23 horizontales qui reposent sur les ailes de fixation 6 de la platine.

Ces ailes 23 présentent respectivement des trous de fixation 24 en correspondance avec les trous de fixation 7 des ailes 6, de façon que la platine 4 et le capot 21 puissent être fixés ensemble par vissage sur le châssis du véhicule.

De plus, les ailes 23 et 6 sont avantageusement fixées l'une à l'autre par sertissage.

Par exemple, ce sertissage peut être réalisé en évasant des portions 25 de la platine 4 à l'intérieur des trous 24 des ailes du capot, lesquels trous ont dans ce cas une forme tronconique évasée vers le haut.

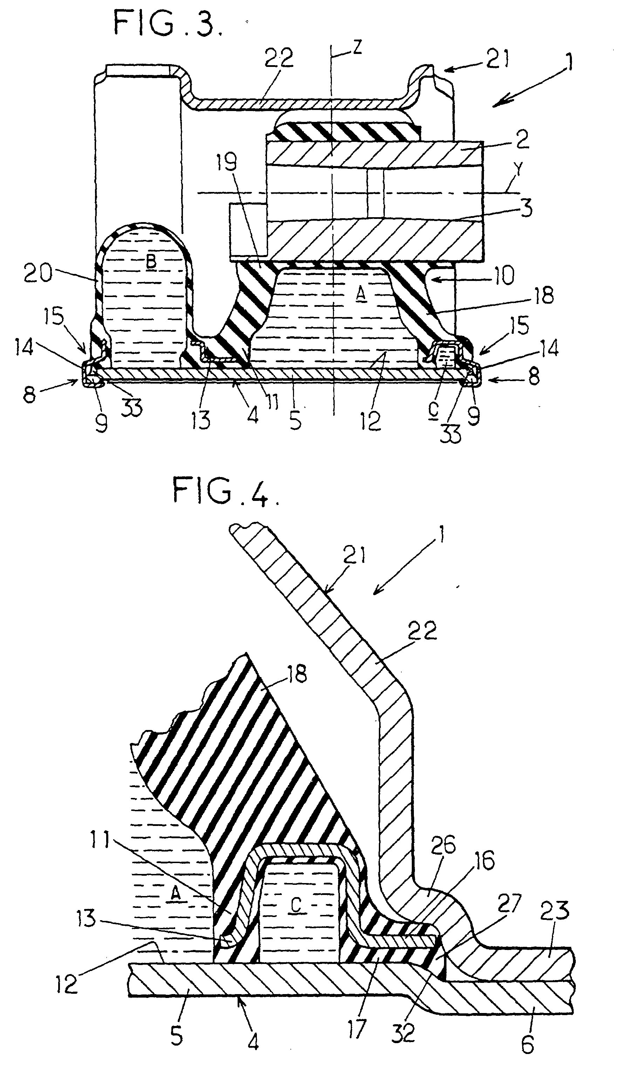

Enfin, comme représenté sur la figure 4, entre sa partie centrale 22 et chacune de ses ailes 23, le capot comporte en outre un ressaut 26 formant une zone d'appui qui s'applique parallèlement à l'axe Z contre les bords libres 16, 17 de la plaque ajourée et de la base du corps en élastomère, en plaquant ainsi ces bords libres contre la face supérieure 12 de la platine.

On garantit ainsi un serrage calibré des bords libres 16,17 sur la platine 4, en évitant toute fuite de liquide entre ladite platine et la base du corps en élastomère au niveau desdits bords libres 16,17.

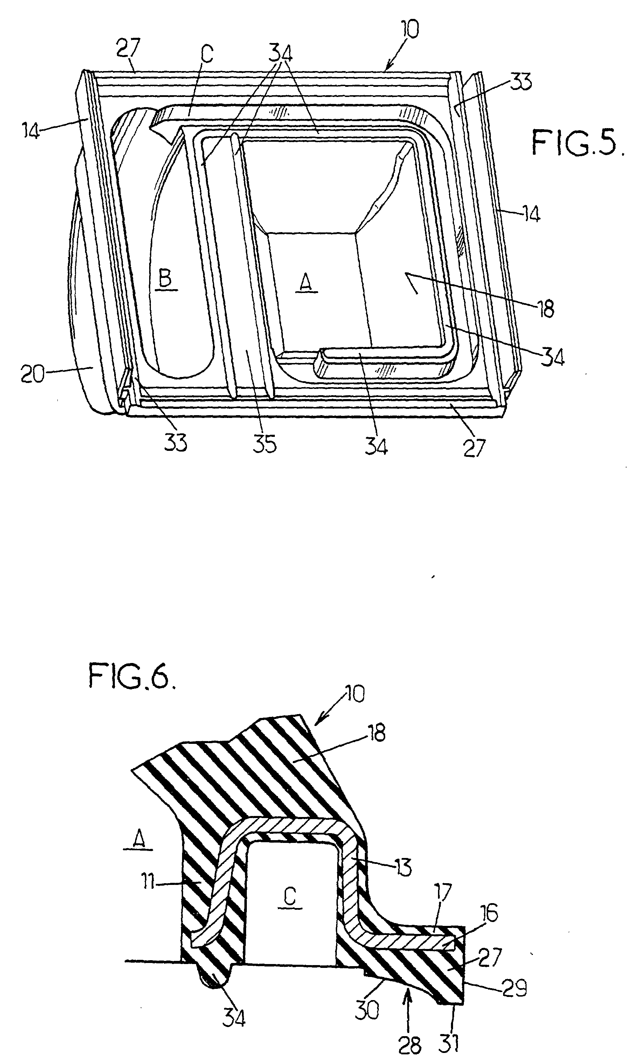

Cette absence de fuite est en outre garantie par la présence de deux lèvres d'étanchéité extérieures 27, bien visibles sur la figure 5, qui s'étendent chacune le long d'un des bords libres 15 de la base du corps en élastomère, sur la face inférieure de cette base.

Afin d'éviter que cette lèvre d'étanchéité ne présente des changements de sens d'inclinaison par rapport à la face supérieure 12 de la platine, chaque lèvre 27 a un profil dissymétrique non perpendiculaire à la face supérieure 12 de la platine, ce profil étant incliné partout dans le même sens par rapport à ladite face supérieure.

Avantageusement, comme représenté sur la figure 6, la lèvre d'étanchéité périphérique 27 se présente sous la forme d'un bourrelet plein en élastomère qui a un profil dissymétrique en V, avec d'une part, une face d'appui 28 radialement intérieure qui s'évase vers le bas, et d'autre part, une face latérale 29 radialement extérieure qui est sensiblement verticale.

La face d'appui 28 de la lèvre d'étanchéité 27 peut présenter par exemple, d'une part, une zone périphérique 30 intérieure, qui présente un profil courbe évasé vers le bas, et d'autre part, une zone extérieure plane 31 sensiblement horizontale.

Par ailleurs, la face supérieure 12 de la platine présente, de part et d'autre de sa partie centrale emboutie 5, deux bords en pente 32 (voir figures 2 et 4) qui s'étendent vers l'extérieur et vers le bas, et sur lesquels viennent s'écraser respectivement les zones courbes 30 des lèvres d'étanchéité 27, tandis que les zones extérieures planes 31 de ces lèvres d'étanchéité viennent s'écraser respectivement contre les faces supérieures des ailes 6.

De plus, la face inférieure de la base 11 du corps en élastomère comporte, le long des pattes serties 14, deux bourrelets 33 en élastomère qui font saillie vers la platine 4 et qui sont au moins partiellement écrasés contre la face supérieure des rebords 9 de cette platine.

Ces deux bourrelets 33 se raccordent aux lèvres d'étanchéité 27, en formant ainsi une barrière d'étanchéité périphérique sur tout le pourtour de la base 11 du corps en élastomère.

Par ailleurs, comme on peut le voir sur les figures 5 et 6, la base du corps en élastomère est également pourvue de nervures axiales 34 qui font saillie vers le bas en direction de la platine 4 et qui sont écrasées contre la face supérieure 12 de cette platine lors du montage du support antivibratoire, ces nervures 34 étant disposées de façon à isoler les uns des autres la chambre de travail A, la chambre de compensation B et le canal étranglé C en dehors des débouchés du canal étranglé C dans la chambre de travail A et dans la chambre de compensation B.

La forme axiale des nervures 34 ne perturbe pas le fonctionnement du support antivibratoire même si ces nervures se couchent d'un côté et d'un autre lors de leur écrasement ou lors du fonctionnement du support antivibratoire.

En effet, si ces possibles changements de sens d'inclinaison le long des nervures 34 peuvent provoquer de légères fuites locales d'une chambre à l'autre, le liquide reste néanmoins contenu à l'intérieur du support antivibratoire. De plus, le débit de ces fuites éventuelles serait très faible, donc ne gênerait pas le fonctionnement du support antivibratoire.

Par ailleurs, afin de limiter encore le débit de ces fuites éventuelles, on peut prévoir deux nervures d'étanchéité 34 parallèles et séparées l'une de l'autre au niveau de la paroi 35 du corps en élastomère, entre la chambre de travail A et la chambre de compensation B.

## Revendications

1. Support antivibratoire hydraulique, destiné à être interposé entre deux éléments rigides pour amortir des vibrations entre ces deux éléments essentiellement selon un premier axe (Z), ce support comportant :
- des première et deuxième armatures rigides (2,4), solidarisables respectivement avec les deux éléments rigides à réunir, la deuxième armature (4) étant constituée par une platine qui s'étend selon un plan moyen perpendiculaire au premier axe (Z) et qui présente une face dite de support (12), orientée vers la première armature,
- un corps en élastomère (10) qui relie la première armature (2) à la platine (4) et qui présente une base (11) appliquée en contact étanche contre la face de support (12) de la platine par simple serrage parallèlement au premier axe (Z), ce serrage axial étant obtenu au moyen d'une plaque ajourée rigide (13) qui est noyée dans la base (11) du corps en élastomère et qui est maintenue appliquée contre la face de support (12) de la platine par sertissage, la base (11) du corps en élastomère présentant à sa périphérie, d'une part, au moins deux bords opposés (15), dits bords de fixation, le long desquels est réalisé ledit sertissage, et d'autre part, au moins deux bords libres (17) qui séparent les bords de fixation (15), la plaque ajourée (13) présentant elle-même des bords libres (16) qui sont noyés dans les bords libres (17) de la base du corps en élastomère et qui sont simplement en appui axial contre la face de support (12) de la platine, le corps en élastomère comportant en outre une paroi épaisse (18) en forme de cloche qui s'étend selon le premier axe (Z) en s'évasant depuis un sommet (19) solidaire de la première armature jusqu'à la base (11) dudit corps en élastomère et qui délimite avec la face de support (12) de la platine au moins une première chambre hydraulique (A) remplie de liquide,
- une deuxième chambre hydraulique (B) déformable qui est également remplie de liquide,
- et un canal étranglé (C) rempli de liquide, qui relie entre elles les première et deuxième chambres hydrauliques (A,B),
**caractérisé en ce que** la base (11) du corps en élastomère présente à sa périphérie, au moins le long de chacun desdits bords libres (17), une lèvre d'étanchéité extérieure (27) en élastomère qui fait saillie vers la platine (4) et qui est au moins partiellement écrasée contre la face de support (12) de cette platine, ladite lèvre d'étanchéité extérieure présentant un profil dissymétrique non perpendiculaire à la face de support (12) de la platine, ce profil étant incliné partout dans le même sens par rapport à ladite face de support de la platine.

2. Support antivibratoire hydraulique selon la revendication 1, dans lequel le profil de la lèvre d'étanchéité périphérique est incliné en s'évasant en direction de la face de support de la platine.

3. Support antivibratoire hydraulique selon la revendication 2, dans lequel chaque lèvre d'étanchéité extérieure (27) se présente sous la forme d'un bourrelet plein en élastomère qui a un profil dissymétrique en V, avec d'une part une face d'appui (28) intérieure qui est évasée en direction de la face de support (12) de la platine et qui est écrasée contre ladite face de support de la platine, et d'autre part une face latérale (29) extérieure qui est sensiblement perpendiculaire au plan moyen de la platine (4).

4. Support antivibratoire hydraulique selon la revendication 3, dans lequel la face de support (12) de la platine présente une partie centrale (5) surélevée qui fait saillie vers le corps en élastomère (10) et qui est encadrée par des bords en pente (32) s'évasant vers l'extérieur en s'éloignant de la première armature (2), en correspondance avec les bords libres (17) de la base du corps en élastomère, les faces d'appui (28) des lèvres d'étanchéité extérieures (27) étant respectivement en appui contre ces bords en pente (32).

5. Support antivibratoire hydraulique selon la revendication 4, dans lequel la face de support (12) de la platine comporte en outre des surfaces extérieures planes (6) qui sont disposées à l'extérieur desdits bords en pente (32) et qui s'étendent parallèlement au plan moyen de la platine, les faces d'appui (28) des lèvres d'étanchéité extérieure (27) présentant chacune une zone extérieure plane (31) qui s'étend parallèlement à la surface extérieure plane (6) correspondante de la platine et qui est en appui contre ladite surface extérieure plane.

6. Support antivibratoire hydraulique selon l'une quelconque des revendications précédentes, dans lequel le corps en élastomère (10) comporte en outre une paroi mince (20) librement déformable qui délimite la deuxième chambre hydraulique (B) avec la face de support (12) de la platine, le canal étranglé (C) étant lui-même délimité entre la base (11) du corps en élastomère et ladite face de support de la platine.

7. Support antivibratoire hydraulique selon la revendication 6, dans lequel la base (11) du corps en élastomère présente en outre au moins une lèvre d'étanchéité intermédiaire (34) qui fait saillie vers la platine (4) et qui est écrasée au moins partiellement contre la face de support (12) de cette platine, en isolant les uns des autres la chambre de travail (A), la chambre de compensation (B) et le canal étranglé (C) en dehors des communications du canal étranglé avec lesdites chambres.

8. Support antivibratoire hydraulique selon la revendication 7, dans lequel la base (11) du corps en élastomère présente deux lèvres d'étanchéité intermédiaires (34) parallèles et séparées l'une de l'autre entre la chambre de travail (A) et la chambre de compensation (B).

9. Support antivibratoire hydraulique selon l'une quelconque des revendications précédentes, dans lequel les bords de fixation (15) de la base du corps en élastomère comportent chacun un bourrelet d'élastomère (33) qui fait saillie vers la platine (4) et qui est au moins partiellement écrasé contre la face de support (12) de cette platine, les bourrelets (33) qui correspondent aux différents bords de fixation (15) se raccordant aux différentes lèvres d'étanchéité (27), en formant ainsi une barrière d'étanchéité périphérique sur tout le pourtour de la base (11) du corps en élastomère.

10. Support antivibratoire hydraulique selon l'une quelconque des revendications précédentes, comportant en outre un capot rigide (21) qui recouvre au moins partiellement la paroi épaisse (18) du corps en élastomère de façon à limiter les débattements de la première armature (2) par rapport à la platine (4), ce capot présentant des zones de fixation (23) qui s'étendent parallèlement à la platine (4) et qui sont solidarisées avec cette platine au voisinage des bords libres (17) de la base du corps en élastomère, lesdits bords libres (16,17) de la plaque ajourée et de la base de ce corps en élastomère étant serrés parallèlement au premier axe entre la face de support (12) de la platine et ledit capot (21).

11. Support antivibratoire hydraulique selon la revendication 10, dans lequel la base (11) du corps en élastomère présente deux bords de fixation (15) séparés l'un de l'autre par deux bords libres (17), le capot (21) présentant une forme générale en Ω ouvert selon un deuxième axe (Y) perpendiculaire audit premier axe (X), avec deux ailes de fixation (23) formant lesdites zones de fixation, et la première armature (2) se présentant sous la forme d'un organe rigide allongé s'étendant longitudinalement selon ledit deuxième axe (Y).

## Patentansprüche

1. Hydraulisches schwingungsdämpfendes Lager, das dazu vorgesehen ist, zwischen zwei starren Elementen angeordnet zu werden, um Schwingungen zwischen diesen beiden Elementen im wesentlichen entlang einer ersten Achse (Z) zu dämpfen, wobei dieses Lager aufweist:
- eine erste und eine zweite starre Halterung (2, 4), die mit den beiden zu verbindenden starren Elementen fest verbunden werden können, wobei die zweite Halterung (4) aus einer Platte besteht, die sich im rechten Winkel zu der ersten Achse (Z) erstreckt und eine sogenannte Lagerfläche (12) aufweist, die der ersten Halterung zugewandt ist,
- einen Elastomerkörper (10), der die erste Halterung (2) mit der Platte (4) verbindet und der eine Basis (11) aufweist, die durch einfaches Festziehen parallel zur ersten Achse (Z) in dichten Kontakt mit der Lagerfläche (12) der Platte gebracht wird, wobei dieses axiale Festziehen mittels einer starren, durchbrochenen Platte (13) erfolgt, die in der Basis (11) des Elastomerkörpers versenkt ist und an der Lagerfläche (12) der Platte (4) durch Bördelverbindung angebracht ist, wobei die Basis (11) des Elastomerkörpers an ihrem Außenumfang einerseits mindestens zwei einander gegenüberliegende Ränder (15), genannt Befestigungsränder, aufweist, entlang derer diese Bördelverbindung hergestellt wird, und andererseits mindestens zwei freie Ränder (17) aufweist, die die Befestigungsränder (15) voneinander trennen, wobei die durchbrochene Platte (13) ihrerseits freie Ränder (16) aufweist, die in den freien Rändern (17) der Basis des Elastomerkörpers versenkt sind und sich einfach in axialer Anlage an der Lagerfläche (12) der Platte befinden, wobei der Elastomerkörper ferner eine glockenförmige, dicke Wand (18) aufweist, die sich in der Richtung der ersten Achse (Z) erstreckt, indem sie sich von einer Spitze (19), die mit der ersten Halterung fest verbunden ist, bis zu der Basis (11) dieses Elastomerkörpers ausweitet, und die zusammen mit der Lagerfläche (12) der Platte mindestens eine erste, mit Flüssigkeit gefüllte Hydraulikkammer (A) umgrenzt,
- eine verformbare zweite Hydraulikkammer (B), die ebenfalls mit Flüssigkeit gefüllt ist, und
- einen mit Flüssigkeit gefüllten engen Kanal (C), der die erste und die zweite Hydraulikkammer (A, B) miteinander verbindet,
**dadurch gekennzeichnet,**
**dass** die Basis (11) des Elastomerkörpers an ihrem Außenumfang mindestens an jedem der freien Ränder (17) ein äußere Dichtungslippe (27) aus Elastomer aufweist, die zu der Platte (4) hin hervorsteht und wenigstens teilweise an die Lagerfläche (12) dieser Platte gedrückt wird, wobei diese äußere Dichtungslippe ein unsymmetrisches Profil aufweist, das sich nicht im rechten Winkel zu der Lagerfläche (12) der Platte erstreckt, wobei dieses Profil gegenüber dieser Lagerfläche der Platte überall in der gleichen Richtung geneigt ist.

2. Hydraulisches schwingungsdämpfendes Lager nach Anspruch 1, bei dem das Profil der außen umlaufenden Dichtungslippe geneigt ist, wobei es sich in Richtung zur Lagerfläche der Platte hin erweitert.

3. Hydraulisches schwingungsdämpfendes Lager nach Anspruch 2, bei dem jede äußere Dichtungslippe (27) in der Form eines Vollwulstes aus Elastomer ausgeführt ist, der ein unsymmetrisches, V-förmiges Profil aufweist, das zum Einen aus einer inneren Anlagefläche (28) besteht, die sich zu der Lagerfläche (12) der Platte hin erweitert und gegen diese Lagerfläche der Platte gedrückt wird, und zum Anderen aus einer äußeren Seitenfläche (29) besteht, die im wesentlichen im rechten Winkel zu der Mittelebene der Platte (4) verläuft.

4. Hydraulisches schwingungsdämpfendes Lager nach Anspruch 3, bei dem die Lagerfläche (12) der Platte einen erhöhten zentralen Teil (5) aufweist, der zu dem Elastomerkörper (10) hin hervorsteht und von geneigten Rändern (32) umrahmt wird, die sich von der ersten Halterung (2) weg im Anschluss an die freien Ränder (17) der Basis (11) des Elastomerkörpers nach außen erweitern, wobei sich die Anlageflächen (28) der äußeren Dichtungslippe (27) jeweils in Anlage an diesen geneigten Rändern (32) befinden.

5. Hydraulisches schwingungsdämpfendes Lager nach Anspruch 4, bei dem die Lagerfläche (12) der Platte ferner ebene Außenflächen (6) aufweist, die außerhalb der genannten geneigten Ränder (32) angeordnet sind und sich parallel zur Mittelebene der Platte erstrecken, wobei die Anlageflächen (28) der äußeren Dichtungslippen (27) jeweils einen ebenen Außenbereich (31) aufweisen, der sich parallel zu der entsprechenden ebenen Außenfläche (6) der Platte erstreckt und sich in Anlage an dieser ebenen Außenfläche befindet.

6. Hydraulisches schwingungsdämpfendes Lager nach einem der vorherigen Ansprüche, bei dem der Elastomerkörper (10) ferner eine dünne, frei verformbare Wand (20) aufweist, die die zweite Hydraulikkammer (B) mit der Lagerfläche (12) der Platte umgrenzt, wobei der enge Kanal (C) seinerseits zwischen der Basis (11) des Elastomerkörpers und der genannten Lagerfläche (12) der Platte eingegrenzt ist.

7. Hydraulisches schwingungsdämpfendes Lager nach Anspruch 6, bei dem die Basis (11) des Elastomerkörpers ferner mindestens eine zwischenliegende Dichtungslippe (34) aufweist, die zu der Platte (4) hin hervorsteht und wenigstens teilweise an die Lagerfläche (12) dieser Platte gedrückt wird, wobei sie die Arbeitskammer (A), die Ausgleichskammer (B) und den engen Kanal (C) außerhalb der Verbindungen des engen Kanal zu diesen Kammern voreinander isoliert.

8. Hydraulisches schwingungsdämpfendes Lager nach Anspruch 6, bei dem die Basis (11) des Elastomerkörpers zwei zwischenliegende Dichtungslippen (34) aufweist, die parallel zueinander und voneinander getrennt zwischen der Arbeitskammer (A) und der Ausgleichskammer (B) angeordnet sind.

9. Hydraulisches schwingungsdämpfendes Lager nach einem der vorherigen Ansprüche, bei dem die Befestigungsränder (15) der Basis des Elastomerkörpers jeweils einen Wulst aus Elastomer (33) aufweisen, der zu der Platte (4) hin hervorsteht und wenigstens teilweise an die Lagerfläche (12) dieser Platte gedrückt wird, wobei die Wülste (33), die den einzelnen Befestigungsrändern (15) entsprechen, sich an die einzelnen Dichtungslippen (27) anschließen, so dass auf diese Weise eine um den gesamten Umfang der Basis (11) des Elastomerkörpers umlaufende Dichtigkeitssperre gebildet wird.

10. Hydraulisches schwingungsdämpfendes Lager nach einem der vorherigen Ansprüche, das ferner eine starre Abdeckung (21) aufweist, die die dicke Wand (18) des Elastomerkörpers zumindest teilweise dergestalt überdeckt, dass die Ausschläge der ersten Halterung (2) gegenüber der Platte (4) eingeschränkt werden, wobei diese Abdeckung Befestigungsbereiche (23) enthält, die sich parallel zu der Platte (4) erstrecken und mit dieser Platte im Bereich der freien Ränder (17) der Basis des Elastomerkörpers fest verbunden sind, wobei diese freien Ränder (16, 17) der durchbrochene Platte und der Basis dieses Elastomerkörpers parallel zur ersten Achse zwischen der Lagerfläche (12) der Platte und der Abdeckung (21) festgezogen sind.

11. Hydraulisches schwingungsdämpfendes Lager nach Anspruch 10, bei dem die Basis (11) des Elastomerkörpers zwei Befestigungsränder (15) aufweist, die durch zwei freie Ränder (17) voneinander getrennt werden, wobei die Abdeckung (21) die allgemeine Form eines Ω hat, das auf einer zweiten Achse (Y) offen ist, die im rechten Winkel zu der ersten Achse (X) verläuft, wobei zwei Befestigungsflügel (23) die genannten Befestigungsbereiche bilden und die erste Halterung (2) als starres, längliches Organ ausgeführt ist, das sich in Längsrichtung auf der genannten zweiten Achse (Y) erstreckt.

## Claims

1. A hydraulic antivibration support designed to be interposed between two rigid elements to damp vibration between these two elements essentially along a first axis (Z), the support comprising:
• first and second rigid strength members (2, 4) suitable for securing respectively to the two rigid elements to be united, the second strength member (4) being constituted by a plate which extends in a mean plane perpendicular to the first axis (Z) and which has a "support" face (12) facing towards the first strength member;
• an elastomer body (10) connecting the first strength member (2) to the plate (4) and having a base (11) pressed in sealing contact against the support face (12) of the plate merely by being clamped parallel to the first axis (Z), said axial clamping being obtained by means of a rigid perforated insert (13) which is embedded in the base (11) of the elastomer body and which is held pressed against the support face (12) of the plate by crimping, the base (11) of the elastomer body having at its periphery firstly at least two opposite "fixing" edges (15) along which said crimping is performed, and secondly at least two free edges (17) interconnecting the fixing edges (15), the perforated insert (13) itself having free edges (16) which are embedded in the free edges (17) of the base of the elastomer body and which are merely pressed axially against the support face (12) of the plate, the elastomer body further comprising a bell-shaped thick wall (18) which extends along the first axis (Z) which flares to the base (11) of said elastomer body from a top (19) secured to the first strength member and which co-operates with the support face (12) of the plate to define at least a first hydraulic chamber (A) filled with liquid;
• a deformable second hydraulic chamber (B) also filled with liquid; and
• a narrow channel (C) which is filled with liquid, and which interconnects the first and second hydraulic chambers (A, B) ;
the support **being characterized in that** the base (11) of the elastomer body has, at its periphery and at least along each of said free edges (17), an outer sealing lip (27) made of elastomer projecting towards the plate (4) and which is at least partially compressed against the support face (12) of said plate, said outer sealing lip having a profile that is asymmetrical and not perpendicular to the support face (12) of the plate, said profile sloping throughout in the same direction relative to said support face of the plate.

2. A hydraulic antivibration support according to claim 1, in which the profile of the peripheral sealing lip is inclined to flare outwards towards the support face of the plate.

3. A hydraulic antivibration support according to claim 2, in which each outer sealing lip (27) is in the form of a solid bead of elastomer having an asymmetrical V-shaped profile with an inner bearing face (29) which flares outwards towards the support face (12) of the plate and which is compressed against said support face of the plate, and an outer side face (29) which is substantially perpendicular to the mean plane of the plate (4).

4. A hydraulic antivibration support according to claim 3, in which the support face (12) of the plate has a raised central portion (5) which projects towards the elastomer body (10) and which lies between sloping edges (32) flaring outwards going away from the first strength member (2), in correspondence with the free edges (17) of the base of the elastomer body, the bearing faces (28) of the outer sealing lips (27) pressing respectively against the sloping edges (32).

5. A hydraulic antivibration support according to claim 4, in which the support face (12) of the plate further comprises plane outer surfaces (6) which are disposed outside said sloping edges (32) and which extend parallel to the mean plane of the plate, each of the bearing faces (28) of the outer sealing lips (27) having a plane outer zone (31) which extends parallel to the corresponding plane outer surface (6) of the plate and which presses against said plane outer surface.

6. A hydraulic antivibration support according to any preceding claim, in which the elastomer body (10) also has a freely-deformable thin wall (20) which co-operates with the support face (12) of the plate to define the second hydraulic chamber (B), the narrow channel (C) itself being defined between the base (11) of the elastomer body and said support face of the plate.

7. A hydraulic antivibration support according to claim 6, in which the base (11) of the elastomer body further has at least one intermediate sealing lip (34) which projects towards the plate (4) and which is compressed at least in part against the support face (12) of said plate, thereby isolating the working chamber (A), the compensation chamber (B), and the narrow channel (C) from one another apart from the communication between the narrow channel and said chambers.

8. A hydraulic antivibration support according to claim 7, in which the base (11) of the elastomer body has two parallel intermediate sealing lips (34) spaced apart from each other between the working chamber (A) and the compensation chamber (B).

9. A hydraulic antivibration support according to any preceding claim, in which each of the fixing edges (15) of the base of the elastomer body has an elastomer bead (33) which projects towards the plate (4) and which is at least partially compressed against the support face (12) of said plate, the beads (33) which correspond to the various fixing edges (15) connecting to the various sealing lips (27), thereby forming a peripheral sealing barrier around the entire perimeter of the base (11) of the elastomer body.

10. A hydraulic antivibration support according to any preceding claim, further including a rigid cover (21) which covers the thick wall (18) of the elastomer body at least in part so as to limit movement of the first strength member (2) relative to the plate (4), said cover having fixing zones (23) extending parallel to the plate (4) and secured to said plate in the vicinity of the free edges (17) of the base of the elastomer body, said free edges (16, 17) of the perforated insert and of the base of the elastomer body being clamped parallel to the first axis between the support face (12) of the plate and said cover (21).

11. A hydraulic antivibration support according to claim 10, in which the base (11) of the elastomer body has two fixing edges (15) that are interconnected by two free edges (17), the cover (21) being generally Ω-shaped and open on a second axis (Y) perpendicular to said first axis (X), with the two fixing flanges (23) forming said fixing zones, and the first strength member (2) being in the form of an elongate rigid member extending longitudinally along said second axis (Y).
